Europäisches Patentamt

**European Patent Office**

Office européen des brevets

(19)

(11) Publication number: **0 051 780**
A1

(12)

# EUROPEAN PATENT APPLICATION

(21) Application number: **81108861.6**

(22) Date of filing: **24.10.81**

(51) Int. Cl.³: **H 02 P 7/62, G 05 F 1/70**

(30) Priority: **04.11.80 AU 6336/80**

(43) Date of publication of application: **19.05.82**
**Bulletin 82/20**

(84) Designated Contracting States: **AT BE CH DE FR IT LI LU NL SE**

(71) Applicant: **STEADFOLD LIMITED, C/-G. Moscrop Messrs Neville, Russell & Company Chartered Accountants 30 Artillery Lane, Bishopsgate London E1 7LT (GB)**

(72) Inventor: **Rutherford, John Gordon, 299 Durham Street, Christchurch (NZ)**

(54) An electric power saver for starting and controlling three phase three wire a.c. induction motors.

(57) A system of controlling the voltage applied to three phase alternating current induction motors to minimise electrical losses and achieve electricity savings both in starting and running the motor and extending motor life through maintaining lower frame temperatures when the motor is running by correlating motor torque and power factor, monitoring on each phase input current and voltage, with such voltage being referenced between phase and generated star point and adjusting voltage to compensate for changes in load.

EP 0 051 780 A1

1

An Electric power saver for starting and
controlling three phase three wire a.c.
induction motors.

The invention comprises an electric alternating current
induction motor controller for saving electric power
in respect to the electricity used for starting and
running such motors and particularly three phase
motors. This electronic device develops and improves
the Power Factor Controller that is the subject of United
States Patent Number: 405.2648 invented by Francis J. Nola
and entitled "Power Factor Control System for A.C.
Induction Motors". The present invention comprises a
power saver which controls the voltage applied to a three
phase, three wire star or delta connected induction motor.

The power saver operation is based on a correlation between
motor torque and power factor. The power saver monitors
the power factor and adjusts the voltage applied to the
motor to compensate for changes in load. Whereas the
previously patented Power Factor Controller referred to
above in its three phase version sampled half wave current
and voltage on one phase only and used an error signal
to control the other phases, the present invention uses
full wave current and voltage sensing on all three phases.
Voltage control in the present invention is achieved by
the use of phase controlled thyristor switches. Full wave
voltage control has been used in preference to half wave
voltage control because of the greater electricity savings
that can be made and because of the generation of even
order harmonics and D.C. polarisation by the use of half
wave voltage control.

2.

Full wave power factor sensing is conducted on all three phases with a composite control voltage derived from the summation of all three phases giving effectively six samples per cycle thereby enabling a faster and greater response and greater system stability.

Voltage references are achieved by monitoring voltage between phase and star point of three wire star configured control circuitry. Such star point is generated by the circuit configuration, this method of voltage referencing is achieved independently of phase rotation and, unlike phase to phase references, prevents any confusion when connecting up the unit in use with a motor. Motor current reference is derived by monitoring voltage across thyristors.

Two selectable modes of start up voltage for the motor are incorporated in the power saver.

1. Full voltage start
2. Timed voltage ramp soft start with presetable start voltage and ramp rate.

Use of full voltage start allows the full motor starting torque to be achieved and the soft start limits the start current and shock loading on the motor and its windings, thereby extending motor life.

The reduction in start current associated with the use of soft start enables the use of lower rated switching thyristors for a particular installation hence reducing the overall cost of the unit and accordingly the payback period related to the electricity savings achieved in the commercial operation of a motor controlled by the power saver.

3.

In the drawings submitted with this specification:

Figure 1   Depicts 3 phase contol circuit configuration with series R.C. networks used to supply power currents to control circuit sections.

Figure 2   Shows circuit used to derive and regulate supply voltages from star currents in Figure 1.

Figure 3   Shows power factor sensing circuit as used for each phase and means of coupling power factor pulse stream to control circuitry.

Figure 4   Shows low pass filter used to summate and filter the power factor signals from all three phases to generate the composite control voltage.

Figure 5   Depicts phase reference circuit showing zero crossing detector, ramp generator and comparator.

Figure 6   Shows full voltage and soft start circuits used to over ride control voltage during starting.

Figure 7   Depicts overall circuit configuration showing complete control system.

The best method of performing the invention is as follows:

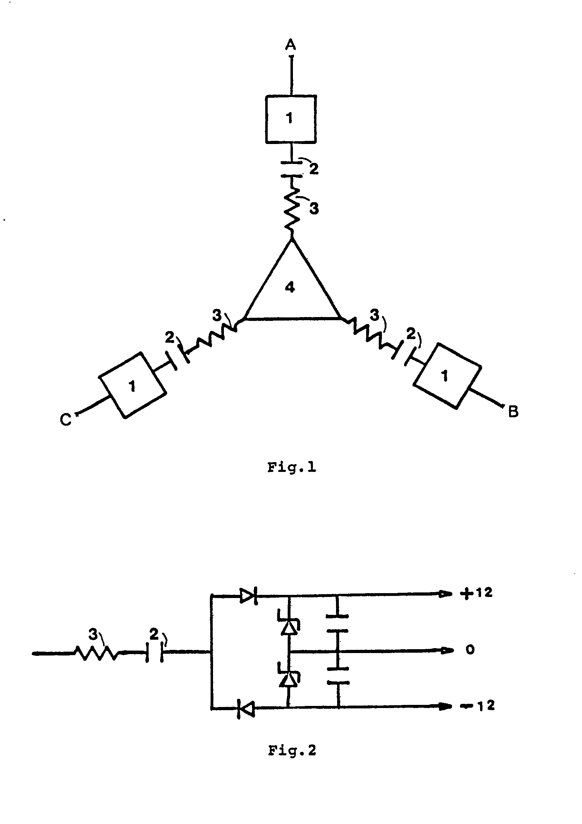

The three phase power saver control circuitry is arranged in a three wire star configuration as shown in figure 1. Power factor monitoring circuits '1' at each phase and resistor '3' capacitor '2' comprising each star arm. The composite processing, control and thyristor firing circuits are connected at the centre star point '4'.

Power supplies for each section of the circuit are derived from the current flowing in the star arms as shown in Fig.2.

4.

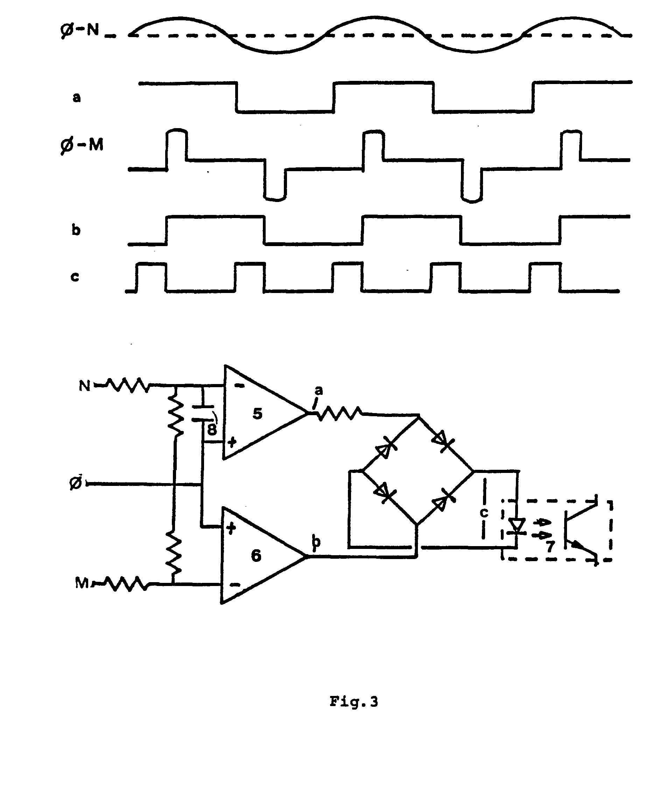

Full wave power factor monitoring is achieved as illustrated in Fig. 3. A comparator '5' monitors the polarity of the voltage between the star point and phase to generate a voltage reference 'a'. A second comparator '6' monitors the polarity of the voltage across the thyristor switching element 'O-M' to generate the current waveform 'b'. The outputs from the comparators are connected to an opto coupler '7' in a logic OR configuration such that current flows through the opto coupler when voltage and current polarities oppose 'c'. A capacitor '8' is connected across the voltage comparator '5' to introduce a twenty degree phase delay to enhance composite signal processing. The resultant power factor waveform 'c' has a mark space ratio proportional to the power factor.

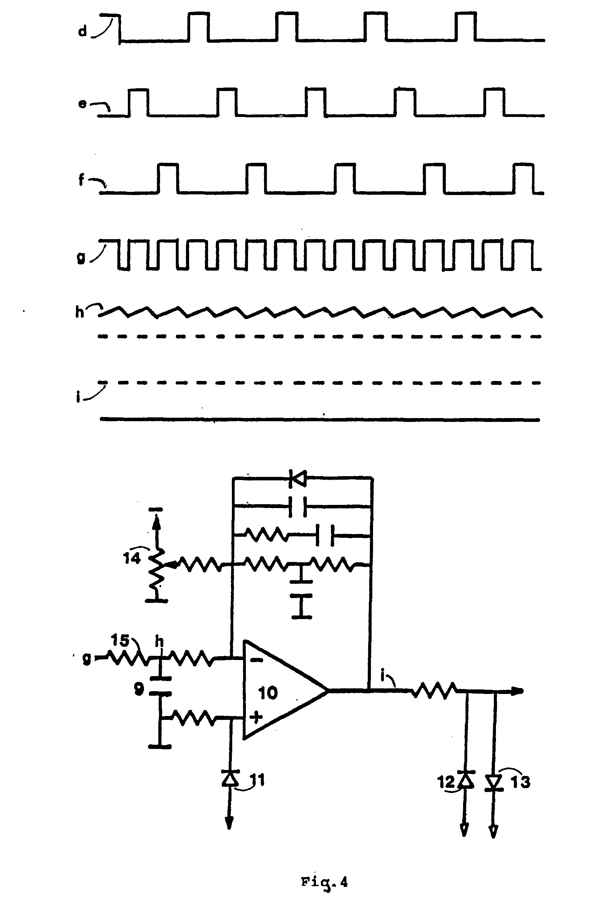

The three full wave derived power factor signals 'd' 'e' 'f' in fig. 4 from the three opto couplers are summed 'g' and passed through a single pole resistor capacitor low pass filter '9' and '15', to a response shaping active filter generating the composite control voltage 'i' for controlling the firing delay angle. Power factor operating point is adjusted by the offset current from a trimpot '14' to the input of the low pass filter operational amplifier '10'.

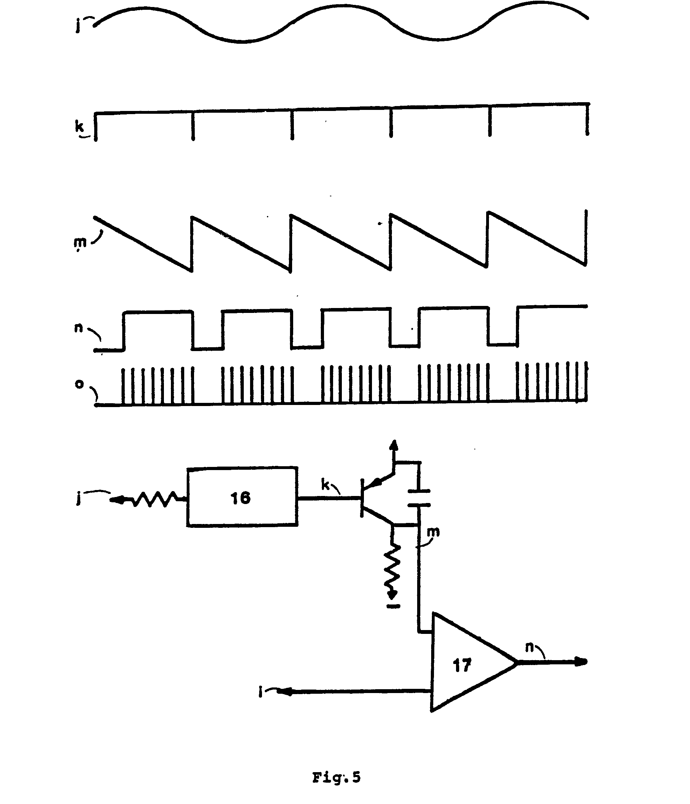

Motor voltage control is achieved by introducing a voltage referenced phase delay in turning on series switching thyristors which may be either triacs or parrallel polarity opposed connected SCRs. Thyristor firing enable signals for each phase, Fig. 5 'n' are derived from a voltage comparator '17' comparing the composite control voltage 'i' and a voltage ramp 'm' which is reset by

5.

a zero crossing detector '16' monitoring the phase to star point voltage 'j'.

The firing signals 'o' comprise high frequency pulse streams, transformer coupled to the thyristor gates.

The power saver incorporates two alternative starting modes for starting the motor.

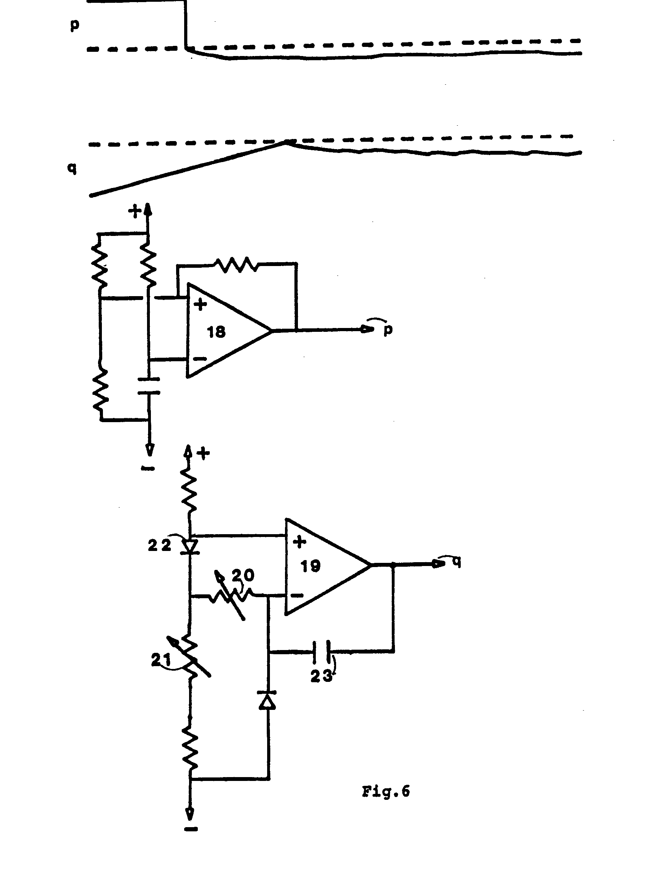

1.   Full voltage start.  When power is initially applied to the power saver the control voltage is overridden via diode '12' fig. 4 by timer circuit '18' fig. 6 waveform 'q' and full phase voltage is applied to the motor and maintained for long enough for the motor to reach full speed.

2.   Soft start.  During starting, the control voltage is overridden via diode '13' fig. 4 by the integrator '19' fig. 6 which generates a voltage ramp corresponding to the firing angle delay.   Starting delay angle is preset by trimpot '21' and ramp rate is determined by the input current to the integrator, adjusted by trimpot '20' which is supplied with a constant potential by the forward biased diode '22'. During the start up period, the low pass filter is disabled by diode '11' fig. 4 to ensure that the control voltage is not influenced by the power during start up period.

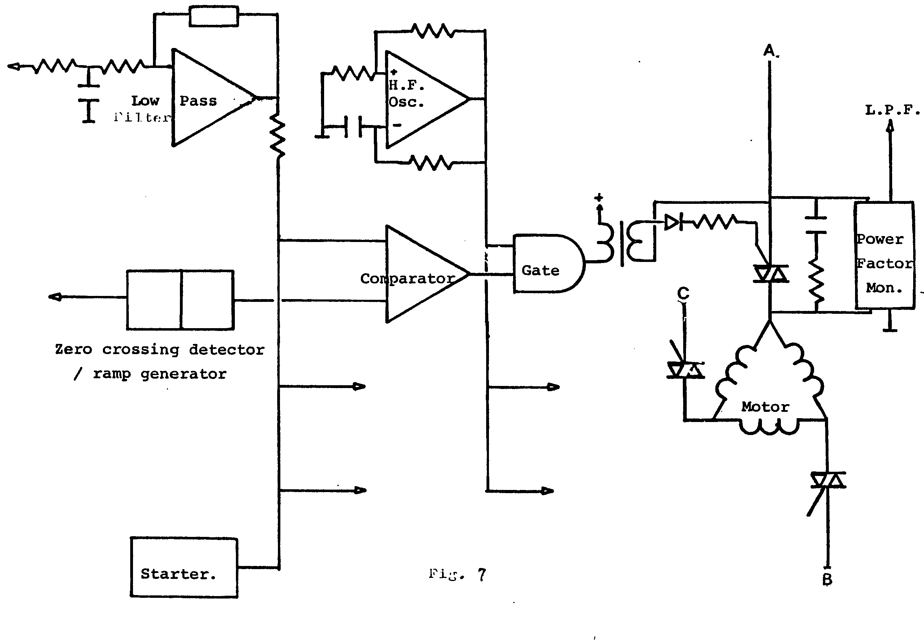

Fig. 7 illustrates the overall configuration of the power saver showing the control sections for one phase only. The low pass filter, high frequency oscillator and starter sections are common to all three phases, with separate zero crossing  detector, ramp detector, comparator, gate and power factor monitor required for each phase.

- 6 -

CLAIMS:

1. A system of controlling the voltage applied to three phase, three wire star or delta connected alternating current induction motors to minimise electrical losses and achieve power savings both in starting and running the motor and extending motor life through maintaining lower frame temperatures when the motor is running by correlating motor torque and power factor, monitoring the power factor, adjusting the voltage to compensate for changes in load characterised by:

voltage and current monitoring and voltage control on each phase (power) input rather than each winding thereby avoiding the necessity to break into the motor to connect the sampling and control device in series with each winding;

voltage references achieved by monitoring voltage between phase and star (wye) point of three phase star configured circuitry with such star point being generated by the common connection of equal impedances from each phase, thereby enabling voltage references so achieved to be independant of phase rotation, in contrast with voltage reference derived by monitoring the voltage across a winding of a delta connected motor; circuitry as described above that may be utilised without differentiation on either star or delta connected motors.

2. A control system as set forth in claim 1. whereby motor current reference is derived by monitoring voltage across thyristors.

3. A control system as set forth in claim 2. whereby the mode of start up voltage is a timed voltage ramp soft start with presetable start voltage and ramp rate thereby reducing the current, enabling the use of lower rated switching thyristors and limiting the start current and shock loading on the motor and its windings in a manner that would not be possible with full voltage start.

4. A control system as set forth in claim 3. whereby an optional and selectable mode of start up is a full voltage start.

5. A control system as set forth in claim 4. wherein full wave power factor sensing is conducted on all three phases with a composite control voltage derived from the summation of all three phases giving effectively six samples per cycle, and accordingly a faster controller reaction thereby ensuring a balanced control of all three phases in a manner that eliminates the instability that would otherwise be associated with independant control of each phase by single phase controllers.

6. A control system as set forth in claim 5 wherein full wave voltage control is used in preference to half wave.

7. A control system as set forth in claim 6 wherein voltage control is acheived by the use of phase controlled thyristor switches.

1/6

Fig.1

Fig.2

0051780

2/6

Fig.3

Fig. 4

4/6

Fig. 5

Fig.6

Fig. 7

Low Pass Filter

H.F. Osc.

Comparator

Gate

Zero crossing detector / ramp generator

Starter.

A.

L.P.F.

Power Factor Mon.

C

Motor

B

0051780

## EUROPEAN SEARCH REPORT

European Patent Office

| Application number |
|---|
| EP 81 10 8861 |

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | ELEKTROTECHNISCHE ZEITSCHRIFT, Publication A, vol. 100, no. 24, November 1979, BERLIN (DE) J. GABEL: "Wie man Motor-Blindleistung reduziert", pages 1397-1398 <br><br> * page 1397, middle column, line 1 to right-hand column, line 54; figure 2 * <br> --- | 1,5-7 | H 02 P 7/62 <br> G 05 F 1/70 |
| A | US - A - 4 176 307 (L.W. PARKER) <br><br> * column 6, line 41 to column 7, line 19; figure * <br> --- | 1,6,7 | TECHNICAL FIELDS SEARCHED (Int.Cl. 3) <br><br> H 02 P 7/62 <br> H 02 P 5/40 <br> G 05 F 1/70 <br> H 02 P 1/28 |
| A | GB - A - 2 006 484 (L.W. PARKER) <br><br> * page 1, lines 33-80; figure 2 * <br> --- | 1,6,7 | |
| P | WO - A - 80/02895 (THE SCOTT & FETZER COMPANY) <br><br> * page 2, line 19 to page 3, line 29; figures 1 and 4 * | 1,3-7 | |
| | ---------- | | |

| CATEGORY OF CITED DOCUMENTS |
|---|
| X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br> &: member of the same patent family, corresponding document |

| X | The present search report has been drawn up for all claims | |
|---|---|---|
| Place of search <br> The Hague | Date of completion of the search <br> 09.02.1982 | Examiner <br> WEIHS |

EPO Form 1503.1  06.78